# EUROPEAN PATENT SPECIFICATION

(11) **EP 4 091 348 B1**
(45) Date of publication and mention of the grant of the patent: **27.09.2023**
(21) Application number: 21700125.4
(22) Date of filing: 11.01.2021
(51) Int. Cl.: H04W 4/80

(54) **APPARATUS AND METHOD FOR FILTERING ADVERTISEMENTS IN WIRELESS NETWORKS**
VORRICHTUNG UND VERFAHREN ZUM FILTERN VON WERBUNG IN DRAHTLOSEN NETZWERKEN
APPAREIL ET PROCÉDÉ DE FILTRAGE DE PUBLICITÉS DANS DES RÉSEAUX SANS FIL

(30) Priority: 16.01.2020 EP 20152205
(43) Date of publication of application: 23.11.2022
(73) Proprietor: Signify Holding B.V., 5656 AE Eindhoven (NL)
(72) Inventor: SADIKIN, Mohammad, Fal, 5656 AE Eindhoven (NL); ESTEVEZ, Francisco, 5656 AE Eindhoven (NL)
(74) Representative: Verweij, Petronella Daniëlle
(86) International application number: PCT/EP2021/050353
(87) International publication number: WO 2021/144215

(56) References cited:
- WO-A1-2015/177363
- US-A1- 2013 178 148
- BRAUER SEBASTIAN ET AL: "On practical selective jamming of Bluetooth Low Energy advertising", 2016 IEEE CONFERENCE ON STANDARDS FOR COMMUNICATIONS AND NETWORKING (CSCN), IEEE, 31 October 2016 (2016-10-31), pages 1-6, XP033026825, DOI: 10.1109/CSCN.2016.7785169

## Description

### FIELD OF THE INVENTION

The invention relates to the field of communication over wireless networks, such as - but not limited to - Bluetooth networks or other networks with advertisement beacons, for use in various different applications for home, office, retail, hospitality and industry.

### BACKGROUND OF THE INVENTION

Wireless communication particularly Bluetooth Low Energy (BLE) has been becoming prominent communication protocol in Internet of Things (IoT) systems. BLE is a low-power/low-cost wireless network technology enabling single-hop communication in a star topology between a master node and a limited number of power-constrained slave nodes. BLE provides energy efficient connectivity between power-constrained slave devices and a less power-constrained master device. An example of BLE network may consist of a mobile telephone device as master device which can provide Internet or other network connectivity to an ecosystem of resource constrained devices such as sensors, wearables, building automation devices, etc.

There is a desired use case that involves interactions between consumer mobile devices such as smart phones and tablets, and lighting devices and/or other Internet of Things (IoT) devices using low-cost and low power radios. The users like to control or get information from lighting devices and IoT devices via direct communications using radio interfaces already provided on mobile devices. As an example, product manufacturers have turned to Bluetooth or BLE as a solution for maintenance and/or commissioning of network devices in multi-hop networks. Commissioning a new network device onto a multi-hop network requires exchange of network credentials. Devices that are connected via the multi-hop network (e.g. WiFi, ZigBee or the like) and already support Bluetooth or BLE for a different purpose (e.g. streaming audio or video) can be commissioned via Bluetooth or BLE.

However, in a high-density BLE environment (e.g. >200 BLE nodes), discovery of devices for commissioning and/or maintenance purposes may become a problem. In this case, it is difficult to discover a specific target device since all devices in the dense network broadcast their own advertisement beacons (advertisements) in very short periods (e.g. every 20ms to 100ms), so that the chance of a collision among advertisements increases significantly.

US 2013/178148A1 discloses a method for selectively, dynamically and adaptively jamming the third-party radio communications that are external to a radio communication network to be protected, which optimizes the effectiveness of the jamming of P predefined areas or positions in a network of transmitters.

Non-patent publication "On practical selective jamming of Bluetooth low Energy advertising", Sebastian Brauer, 31st October 2016, proposes the jamming of beaconing devices on specific advertising channels.

### SUMMARY OF THE INVENTION

It is an object of the present invention to improve discovery of target devices in dense network environments.

This object is achieved by an apparatus as claimed in claim 1, by a jammer device as claimed in claim 7, by a method as claimed in claim 8, and by a computer program product as claimed in claim 9.

Accordingly, a beacon signal (e.g. BLE advertisement) can be filtered by controlling a directional antenna to transmit a jamming signal to a directionally restricted jamming area during transmission of the beacon signal to allow receipt of the beacon signal by a master device. Thereby, proper discovery of target devices in dense network environments can be enabled by using spatially selective "friendly" jamming with a beamforming antenna to jam at least one specific sector of non-target devices on at least one specific advertisement channel, so that a master device can discover a beacon signal (e.g. advertisement) of a target device, in order to successfully connect to it. In addition, since jamming is performed on advertisement channels only, data connection channels are not disturbed. Thereby, a mobile device will be able to connect to a remote target lighting or IoT devices via a single-hop link even in dense environments with lots of advertisements.

It is noted that the apparatus may be implemented based on discrete hardware circuitries with discrete hardware components, integrated chips, or arrangements of chip modules, or based on signal processing devices or chips controlled by software routines or programs stored in memories, written on a computer readable media, or downloaded from a network, such as the Internet.

It shall be understood that a preferred embodiment of the invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
Fig. 1 shows schematically a frequency band with data and advertisement channels of a BLE system;
Fig. 2 shows schematically an advertisement timing schedule of a BLE system;
Fig. 3 shows schematically a high-density network environment with an advertisement collision;
Fig. 4 shows a directional antenna pattern of a sector antenna;
Fig. 5 shows a network environment with a beamforming jamming device according to various embodiments; and
Fig. 6 shows a flow diagram of a jamming-based advertisement filtering procedure according to various embodiments.

### DETAILED DESCRIPTION OF EMBODIMENTS

Embodiments of the present invention are now described based on a network environment where scanning and/or connection and/or commissioning procedures are based on BLE advertisements of target devices.

In various embodiments of the present invention, BLE technology is used for establishing connections to network devices. However, the present invention is equally applicable to any other single-hop technology (e.g. Infrared (IR), near field communication (NFC), wireless local area communication (Wi-Fi)) in which beacons or advertisements are used. The advertising network devices may be connected to each other via a wireless multi-hop technology (e.g. ZigBee PRO, Thread, WirelessHART, SmartRF, City Touch, IP500, and any other mesh or tree-based technology).

Advertising is a basis for so called beacons, where small devices periodically broadcast connection information to other devices nearby, e.g. smartphones. In combination e.g. with a smartphone app an installed beacon network can provide a variety of services, such as indoor localization, commissioning, proximity-triggered advertising, mobile payment systems, etc.

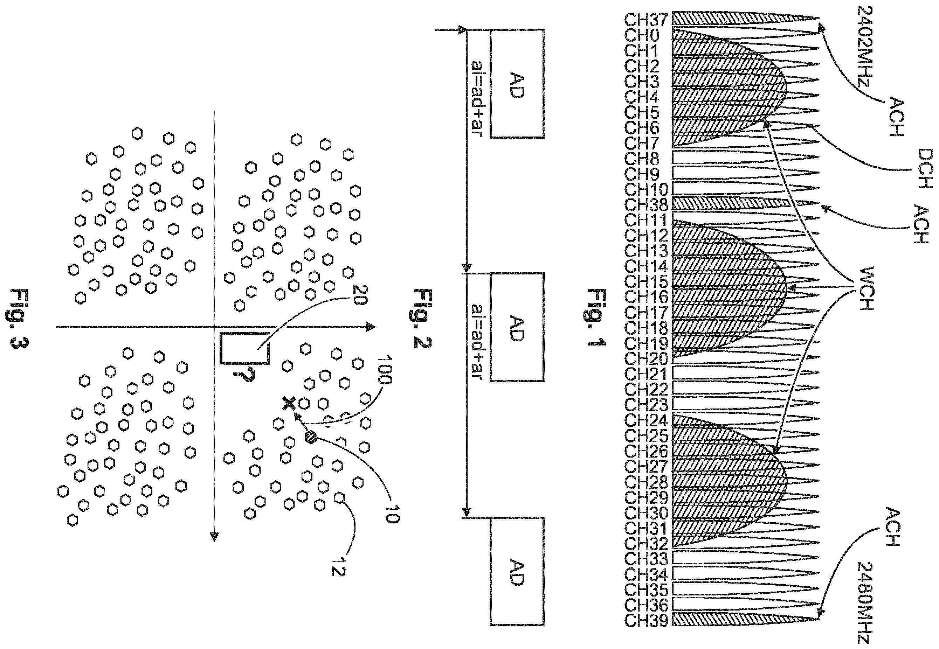

Fig. 1 shows schematically a frequency band with data and advertisement channels of a BLE system as an example of a single-hop system for scanning, connecting to and/or commissioning a target device.

The BLE physical layer uses the 2.4GHz band (2402-2483.5 MHz) which is divided into forty channels CH0 to CH39 with a spacing of 2MHz each. Channels 37, 38 and 39 are so-called advertisement channels (ACH) and are used for device discovery, broadcasting information and establishing a connection, whereas the remaining channels are defined as data channels (DCH) and are used for data exchange during a connection. The three advertisement channels CH37 to CH39 are spread across the 2.4 GHz band in order to achieve frequency diversity and being robust against interference from other channels (e.g. Wi-Fi, classic Bluetooth, Microwaves, etc.). As an example, overlapping WiFi channels (WCH) are shown in Fig. 1.

In order to discover a specific target device, a master device (e.g. smartphone) listens to the advertisement channels CH37 to CH39 to find the Media Access Control (MAC) address of the target device.

Every frame transmitted through a BLE channel has a known preamble followed by a known access address which can be used to synchronize and correlate against. On the three advertisement channels the access address and the preamble are fixed to enable broadcast reception.

The link layer of the BLE protocol distinguishes between three basic device roles, namely, advertiser, scanner and initiator. A device in the advertiser role will periodically broadcast frames on each advertising channel. These frames may contain information about the advertiser such as services and features the advertiser supports as well as manufacturer specific information.

Fig. 2 shows schematically an advertisement timing schedule of a BLE system.

The time interval (ai) between frames has both a fixed interval or delay (ad) and a random delay (ar), so that ai=ad+ar. The fixed interval can be set from 20ms to 10.24s in 0.625ms steps, whereas the random delay is a pseudo-random value between 0 and 10ms. The purpose of the latter is to reduce the possibility of collisions between advertisement frames from different co-located devices. A short time interval increases the chance of being discovered quickly but also increase the chance of collision with other advertisements.

In order to save power, the BLE specification allows sending advertisement frames on just one or two channels at the cost of reduced robustness against interference.

A device in the scanner role will passively listen for frames sent by advertisers in proximity. It may or may not request further information from an advertiser by sending a scan request on the same channel it received the advertiser's frame. The advertiser will respond to this by sending a scan response containing services that were previously unmentioned or data that did not fit in the advertising frame, e.g. the device name.

A device that wishes to build a connection with an advertiser is called an initiator. The initiator therefore sends a connection request to the advertiser. If the connection request is accepted by the advertiser, both devices will leave the advertising channel and form a connection as specified in the connection request frame.

Thus, advertisements are used to discover and connect to a BLE device. However, in high-density environments with a high density of BLE devices, such as in a IoT horticulture application where the number of nodes is extremely high (e.g. >10.000 nodes), device discovery becomes a problem. Another example for a high-density environment is a large-area lighting installation such as in a big office, where everybody typically carries at least two or three BLE devices including smartphone, laptop, and wearable device. Such scenarios lead to an increased risk of advertisement collisions, particularly when the number of BLE device. is bigger than 200.

Fig. 3 shows schematically a high-density network environment with a lot of advertising BLE devices 12 in different sectors separated by a horizontal and vertical axis. A target device 10 broadcasts an advertisement 100 which is blocked due to a collision with other advertisement(s). As a result, a master device 20 cannot discover the target device 10.

In various embodiments, it is therefore proposed to filter out colliding advertisements of non-targeted devices 12 by performing friendly jamming on at least one specific sector of the non-targeted devices 12. The sectorized friendly jamming can be restricted to at least one specific sector of non-target devices and to at least one of the specific advertisement channels used by the single-hop system (e.g. BLE). Thus, advertisements of non-target devices 12 can be easily filtered-out and the target device 10 can be discovered by the master device 20.

The friendly jamming may be performed shortly just for a few seconds, so that the short jamming will not significantly disturb other advertisements of non-target devices 12. The jamming signal disturbs the content of advertisement packets so that they are discarded at the receiver side, e.g., due to a non-matching error correction checksum or the like. In addition, as the jamming is performed in advertisement channel(s) only, established BLE data connections that work on data channels are not disturbed either.

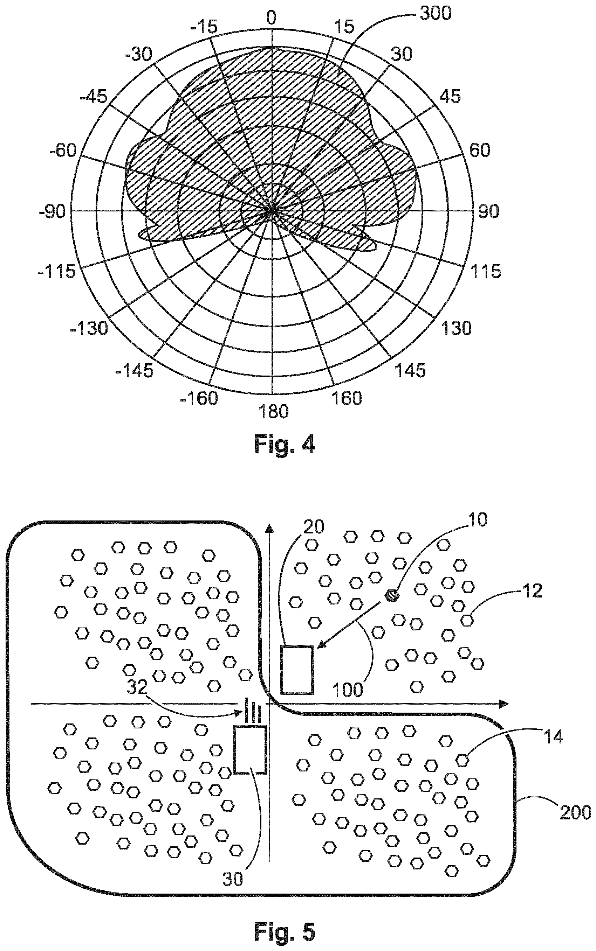

Fig. 4 shows an exemplary directional antenna pattern 300 of a sector antenna that can be used by the proposed jammer device as a beamforming antenna to filter-out potentially colliding advertisements of non-target devices located in a specific sector.

By using beamforming technics, the jamming area can be sectorized and restricted for spatial filtering. That is, jamming can be selectively applied to specific sector(s). As shown in Fig. 4, according to the exemplary antenna pattern 300, the power gain can be directed to a specific sector roughly between -90° and +90°.

Beamforming or spatial filtering is a signal processing technique used in sensor or antenna arrays for directional signal transmission or reception. This can be achieved by combining elements in an antenna array in such a way that signals experience constructive interference while others experience destructive interference at particular angles. To change the directionality of the array during transmission, a beamformer may control the phase and relative amplitude of the advertisement signal at each transmitter, in order to create a pattern of constructive and destructive interference in the wave front. At the receiver side, information from different sensors or antenna elements is combined in a way that the expected pattern of radiation is preferentially observed. The improvement compared with omnidirectional reception/transmission is known as directivity of the array.

Beamforming techniques can be broadly divided into conventional (fixed or switched beam) beamformers and adaptive beamformers or phased array with desired signal maximization mode or interference signal minimization or cancellation mode. Both techniques may be used to implement the proposed sectorized jamming.

Fig. 5 shows a network environment with a beamforming jammer device 30 according to various embodiments.

The jammer device 30 comprises a beamforming directional or sector antenna 32 (e.g. as indicated in Fig. 5 by an array of three antenna elements) to provide directivity for jamming specific sectors of the network environment.

In Fig. 5, four exemplary sectors are divided into a target sector (upper right sector) with non-jammed BLE devices 12 including the target device 10, and three non-target sectors covered by a directionally restricted jamming area 200 and including jammed BLE devices 14 located within the directional pattern 300 of the beamforming antenna of the jammer device 30.

The jamming effect of the jammer device 30 may depend on its radio transmitter power, location and influence on the network or the jammed devices. The jammer device 30 may jam the network in various ways to make jamming as effective as possible.

Jamming in wireless networks can be defined as a disruption of existing wireless communications by decreasing the signal-to-noise ratio at receiver sides through the transmission of interfering wireless signals.

As an example, the actual friendly jamming may be accomplished by transmitting something that looks like noise (e.g. pseudorandom bits) at a sufficient power level. If the transmission power is high enough in relation to the jamming area 200, the jamming signal will distort other traffic (i.e. other advertisements) within the jamming area 200 to a point where it's indistinguishable from noise. Since no more traffic is getting through, other advertisements originating from the jamming area 200 should fail at this point.

Furthermore, jamming can be done at different levels, from hindering transmission (e.g. radio jamming) to distorting packets in legitimate communications (e.g. link-layer jamming). By exploiting semantics of the link-layer protocol (i.e. MAC protocol), better jamming efficiency can be achieved compared to blindly jamming the radio signals alone.The friendly jamming may be performed only for a few seconds (e.g. 2s). Thus, the target device 10 can be discovered, and advertisements of other devices 14 in the jamming area 200 will not be significantly disturbed.

In an embodiment, the friendly jamming may be performed in advertisement channels only (e.g. CH37, CH38 and CH39 of the BLE system). Thus, any BLE device 12, 14 that has an ongoing connection can still work without disturbance from the jammer device 30. In an example, only a specific spatial sector of a non-target-device advertisement channel may be jammed by the jammer device 30. That is, the sectorized friendly jamming is applied via the directional antenna 32 to jam a specific sector of non-target devices (e.g. the jamming area 200) on a specific advertisement channel for a short time period. Thereby, the advertisements of non-target devices 14 can be easily filtered-out and the target device 10 can be discovered as well.

In another embodiment, the specific sector of the jamming area 200 may be jammed by the jammer device 30 on one specific advertisement channel only. Jamming only one specific advertisement channel is more feasible to be performed. However, the discovery of the target device 10 may take a longer time, i.e., until the jammed advertisement channel is used by the target device 10.

In a further embodiment, the specific sector of the jamming area 200 may be jammed by the jammer device 30 on all available advertisement channels (e.g. CH37, CH38, CH39). Jamming all advertisement channels may require more than one jammer device 30 (e.g. one for each advertisement channel). However, this technique can speed up discovery of the target device 10.

In various embodiments, the jamming may be triggered by the master device 20, e.g., when the master device 20 aims at discovering a specific target device 10.

There are several types of jammers that can be used as the jammer device 30 to filter out or block non-wanted advertisements. According to generic jammer models, the jammer device 30 may be a constant jammer that emits continuous, random bits without following a channel sense multiple access (CSMA) protocol of the MAC layer, a deceptive jammer that continuously transmits regular packets instead of random bits, a random jammer that intermittently transmits either random bits or regular packets into networks, a reactive jammer (such as a request-to-send (RTS) / clear-to-send (CTS) jammer that reacts on a sensed RTS message, or a Data/Acknowledgement jammer that jams the network by corrupting transmissions of data or acknowledgement (ACK) packets), a function-specific jammer (such as a follow-on jammer that hops over all available channels very frequently and jams each channel for a short period of time, or a channel-hopping jammer that hops between different channels proactively with direct channel access by overriding a CSMA algorithm provided by the MAC layer, or a pulsed-noise jammer that can switch channels and jam on different bandwidths at different periods of time), or a smart-hybrid j ammer (such as a control-channel jammer that targets a control channel or other channel used to coordinate network activity, or an implicit j ammer that in addition to disabling the functionality of the intended target, causes denial-of-service state at other nodes of the network too, or a flow jammer that jams packets to reduce traffic flow by using information from the network layer).

Moreover, the jammer device 30 can be selective if it can be programmed to attack just specific frames. As the advertisements are sent on different channels redundantly, it can be further distinguished between narrowband and wideband jamming depending on whether only a single or multiple advertisement channels are to be jammed at the same time.

The different jammer types vary with regard to their efficiency, power-consumption and complexity. A constant wideband jammer emits noise over a large frequency range. Although it has a low complexity, its efficiency is low and energy consumption is high. This is because such a jammer may have to jam all three advertisement channels simultaneously which are spread over the whole 2.4 GHz band, as shown in Fig. 1.

A constant narrow-band j ammer emits the jamming signal permanently but only on a single advertising channel. As in this case only a single channel can be jammed at a same time, frequency hopping may need to be applied.

A reactive wideband jammer is based on the observation that advertisements are only sent at certain points in time, e.g. every second. Therefore, it may be sufficient to emit the jamming signal only during frame transmission. Hence, such a periodic jammer needs to synchronize with the advertising source to be filtered out, which requires a sniffing or channel sensing component.

A reactive narrow-band jammer emits the jamming signal on a single advertising channel only when a frame transmission to be attacked has been detected. Again, frequency hopping may need to be performed in order to not miss beacon frames transmitted on other channels.

The proposed jammer device 30 may be reactive as only a short jamming signal is intended to be emitted during transmission of an advertisement frame which is long enough to corrupt the frame (e.g. due to an error checking failure).

The jammer device 30 may be a commercial off-the-shelf (COTS) embedded hardware. One option would be to use a Software-Defined Radio (SDR) like the Universal Software Radio Peripheral (USRP), but there may be a more economical solution available, such as a small Uniform Serial Bus (USB) device called Ubertooth with less expensive and power-hungry software-defined radio hardware (e.g. USRP).

The jammer device 30 may be software-controlled and the jamming program may be an interrupt-controlled state machine. After a jamming signal transmission is stopped, a transmitter or transceiver of the jammer device 30 may be tuned to the next advertising channel to receive and to repeat the process. To avoid being stuck at one channel a timeout (e.g. 10 ms) may be started (which is the maximum time between two advertising frames on consecutive used advertising channels sent in one advertising event). On a timeout the jammer device 30 may return to the first advertising channel. If no timeout occurs, the jamming process may continue as on the previous channel and repeats on the last channel afterwards.

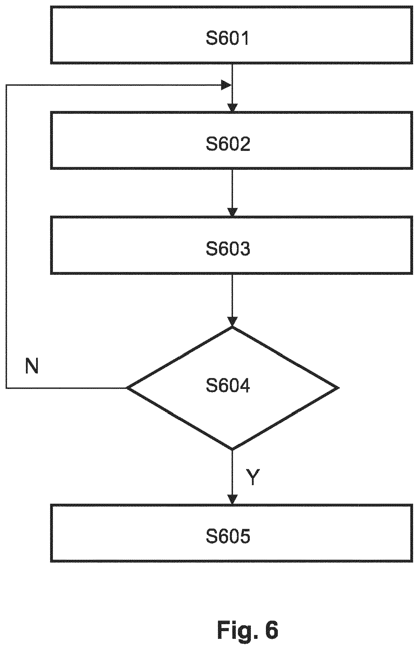

Fig. 6 shows a flow diagram of a jamming-based advertisement filtering procedure which may be executed by a control unit (e.g. a software-controlled processor (e.g. Central Processing Unit (CPU) or digital signal processor (DSP)) according to various embodiments.

In step 601, the control unit determines the spatially restricted (i.e. directional) jamming area 200 (e.g. at least one jamming sector) e.g. based on a control message (e.g. trigger command) received from the master device 20 or the target device 10. The determination may be based on a location or sector information included in the control information or based on a network information about the location of the master device 20 or the target device 10. In the latter case, the target device 10 may have been identified by the master device 20 e.g. in the control message. More specifically, the jamming area 200 is determined as the sector(s) around the directional antenna 32 where the target device 10 is not located.

Then, in step 602, the control unit of the jammer device 30 controls the directional antenna 32 to apply a beamforming processing to direct the directional pattern of the directional antenna 32 (e.g. array of antenna elements) to the directionally restricted jamming area 200.

Thereafter, in step 603, the control unit of the jammer device 30 starts the jamming procedure by initiating transmission of the jamming signal or sequence of signals with a specific timing in the directionally restricted jamming area 200.

In a subsequent optional step 604, the control unit of the jammer device 30 determines whether the jamming was successful or not, e.g., whether a new control message has been received from the same master device 20 within a predetermined time period. If the jamming was not successful (e.g. a new control command has been received from the master device 20), the procedure jumps back to step 602 or 603 and the jamming procedure is repeated (optionally with a new setting of the directivity pattern of the directional antenna 32).

If the jamming was successful (e.g. no new control command has been received from the master device 20), the procedure continues with an optional step 605 where the control unit of the j ammer device waits for a new control command from the network and restarts the procedure at step 601 if a new control command has been received.

To summarize, an apparatus (control unit) and method (jamming-based advertisement filtering procedure) have been described for filtering advertisements of a target device by using friendly jamming with a beamforming antenna to jam at least one advertisement channel in at least one specific directional sector of non-target devices. Thus, a master device can easily discover the advertisement of the target device in order to successfully connect to the target device. In addition, since the jamming is performed on advertisement channels only, data connection channels are not disturbed.

While the invention has been illustrated and described in detail in the drawings and foregoing description, such illustration and description are to be considered illustrative or exemplary and not restrictive. The invention is not limited to the disclosed embodiments. The proposed jamming-based filtering procedures can be applied to and possibly standardized in other types of wireless networks. Moreover, the invention can be applied in any network that implements device discovery, scanning, connection and/or maintenance based on beacon advertisements. An example includes a large-scale ZigBee lighting, sensor or horticulture network where single network devices are commissioned using a mobile device such as smartphone or tablet via a single-hop network (e.g. BLE).

More general, this invention applies to any network environment that implements a network interfacing with a beacon-based single-hop network. An example includes a large-scale ZigBee lighting, sensor or horticulture network where single network devices can be contacted using a mobile device such as smartphone or tablet via BLE (e.g. Cheetah or similar).

Furthermore, while BLE radio is used as an example throughout this document, the invention is equally applicable to any other wireless single hop technology (e.g. BLE, IR, NFC, Wi-Fi) e.g. in combination with a wireless multi-hop technology (e.g. ZigBee PRO, Thread, WirelessHART, SmartRF, CityTouch, and any other mesh or tree-based technology).

Any type of jammer can be used as the jammer device to make the invention applicable for any type of wireless technology. In particular, link-layer jamming may be used for wireless technologies that do not support CSMA Collision Detection (CSMA/CD) or CSMA Collision Avoidance (CSMA/CA).Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage.

The foregoing description details certain embodiments of the invention. It will be appreciated, however, that no matter how detailed the foregoing appears in the text, the invention may be practiced in many ways, and is therefore not limited to the embodiments disclosed. It should be noted that the use of particular terminology when describing certain features or aspects of the invention should not be taken to imply that the terminology is being re-defined herein to be restricted to include any specific characteristics of the features or aspects of the invention with which that terminology is associated.

A single unit or device may fulfill the functions of several items recited in the claims. The mere fact that certain measures are recited in mutually different dependent claims does not indicate that a combination of these measures cannot be used to advantage.

The described operations like those indicated in Fig. 6 can be implemented as program code means of a computer program and/or as dedicated hardware. The computer program may be stored and/or distributed on a suitable medium, such as an optical storage medium or a solid-state medium, supplied together with or as part of other hardware, but may also be distributed in other forms, such as via the Internet or other wired or wireless telecommunication systems.

## Claims

1. An apparatus for filtering advertisement beacon signals (100) transmitted by non-targeted devices in a wireless network, the apparatus being configured to
- determine (601) a directionally restricted jamming area (200) comprising a specific spatial sector of non-target devices (14);
- control a directional antenna (32) to transmit a jamming signal to the jamming area (200) during transmission of the advertisement beacon signals (100) to allow receipt, by a master device (20), of an advertisement beacon signal (100) of a target device (10) located outside the specific spatial sector;
restrict transmission of the jamming signal to at least one of a plurality of predetermined advertisement channels (CH37-CH39) used by the wireless network; and
restrict transmission of the jamming signal to the directionally restricted jamming area on at least one predetermined advertisement channel of the non-target devices (14) for a predetermined time period.

2. The apparatus of claim 1, wherein the apparatus is adapted to transmit the jamming signal on one of the plurality of predetermined advertisement channels (CH37-CH39) only at a time.

3. The apparatus of claim 1, wherein the apparatus is adapted to transmit the jamming signal on all predetermined advertisement channels (CH37-CH39).

4. The apparatus of claim 3, wherein the apparatus is adapted to control more than one jammer device (30) to transmit the jamming signal on all predetermined advertisement channels (CH37-CH39).

5. The apparatus of any one of the preceding claims, wherein the apparatus is adapted to transmit the jamming signal in response to a control command received from the master device (20).

6. The apparatus of any one of the preceding claims, wherein the apparatus is adapted to determine whether jamming was successful or not.

7. A jammer device (20) comprising an apparatus according to any one of claims 1 to 6 and a directional antenna (32) for transmitting the jamming signal to the directionally restricted jamming area (200).

8. A method of filtering advertisement beacon signals (100) transmitted by a target device (10) and non-targeted devices in a wireless network, the method comprising:
determining (601) a directionally restricted jamming area (200) comprising a specific spatial sector of non-target devices (14); and
transmitting a jamming signal to the jamming area (200) during transmission of the advertisement beacon signals (100) to allow receipt, by a master device (20), of an advertisement beacon signal (100) of the target device (10) located outside the specific spatial sector;
restricting transmission of the jamming signal to at least one of a plurality of predetermined advertisement channels (CH37-CH39) used by the wireless network; and
restricting transmission of the jamming signal to the directionally restricted jamming area on at least one predetermined advertisement channel of the non-target devices (14) for a predetermined time period.

9. A computer program product comprising code means for producing the steps of claim 8 when run on a computer device

## Patentansprüche

1. Einrichtung zum Filtern von Werbungsbakensignalen (100), die durch nicht zielgerichteten Vorrichtungen in einem drahtlosen Netzwerk übertragen werden, wobei die Einrichtung konfiguriert ist zum
- Bestimmen (601) eines richtungsbegrenzten Störbereichs (200), umfassend einen spezifischen räumlichen Sektor von Nicht-Zielvorrichtungen (14);
- Steuern einer Richtantenne (32), um ein Störsignal an den Störbereich (200) während einer Übertragung der Werbungsbakensignale (100) zu übertragen, um einen Empfang, durch eine Master-Vorrichtung (20), eines Werbungsbakensignals (100) einer Zielvorrichtung (10) zu ermöglichen, die sich außerhalb des spezifischen räumlichen Sektors befindet;
Begrenzen der Übertragung des Störsignals an mindestens eines einer Vielzahl von zuvor bestimmten Werbungskanälen (CH37-CH39), die durch das drahtlose Netzwerk verwendet werden; und
Begrenzen der Übertragung des Störsignals auf den richtungsbegrenzten Störbereich auf mindestens einen zuvor bestimmten Werbungskanal der Nicht-Zielvorrichtungen (14) für einen zuvor bestimmten Zeitraum.

2. Einrichtung nach Anspruch 1, wobei die Einrichtung angepasst ist, um das Störsignal nur zu einem Zeitpunkt auf einen der Vielzahl von zuvor bestimmten Werbungskanälen (CH37-CH39) zu übertragen.

3. Einrichtung nach Anspruch 1, wobei die Einrichtung angepasst ist, um das Störsignal auf alle zuvor bestimmten Werbungskanäle (CH37-CH39) zu übertragen.

4. Einrichtung nach Anspruch 3, wobei die Einrichtung angepasst ist, um mehr als eine Störvorrichtung (30) zu steuern, um das Störsignal auf alle zuvor bestimmten Werbungskanäle (CH37-CH39) zu übertragen.

5. Einrichtung nach einem der vorstehenden Ansprüche, wobei die Einrichtung angepasst ist, um das Störsignal als Reaktion auf einen Steuerbefehl zu übertragen, der von der Master-Vorrichtung (20) empfangen wird.

6. Einrichtung nach einem der vorstehenden Ansprüche, wobei die Einrichtung angepasst ist, um zu bestimmen, ob ein Stören erfolgreich war oder nicht.

7. Störvorrichtung (20), umfassend eine Einrichtung nach einem der Ansprüche 1 bis 6 und eine Richtantenne (32) zum Übertragen des Störsignals an den richtungsbegrenzten Störbereich (200).

8. Verfahren zum Filtern von Werbungsbakensignalen (100), die durch eine Zielvorrichtung (10) und nicht zielgerichteten Vorrichtungen in einem drahtlosen Netzwerk übertragen werden, das Verfahren umfassend:
Bestimmen (601) eines richtungsbegrenzten Störbereichs (200), umfassend einen spezifischen räumlichen Sektor von Nicht-Zielvorrichtungen (14); und
Übertragen eines Störsignals an den Störbereich (200) während der Übertragung der Werbungsbakensignale (100), um den Empfang, durch eine Master-Vorrichtung (20), eines Werbungsbakensignals (100) der Zielvorrichtung (10) zu ermöglichen, das sich außerhalb des spezifischen räumlichen Sektors befindet;
Begrenzen der Übertragung des Störsignals an mindestens eines einer Vielzahl von zuvor bestimmten Werbungskanälen (CH37-CH39), die durch das drahtlose Netzwerk verwendet werden; und
Begrenzen der Übertragung des Störsignals an den richtungsbegrenzten Störbereich auf mindestens einen zuvor bestimmten Werbungskanal der Nicht-Zielvorrichtungen (14) für einen zuvor bestimmten Zeitraum.

9. Computerprogrammprodukt, umfassend Codemittel zum Produzieren der Schritte nach Anspruch 8, wenn es auf einer Computervorrichtung ausgeführt wird.

## Revendications

1. Appareil destiné à filtrer des signaux de balises publicitaires (100) transmis par des dispositifs non ciblés dans un réseau sans fil, l'appareil étant configuré pour
- déterminer (601) une zone de brouillage à restriction directionnelle (200) comprenant un secteur spatial spécifique de dispositifs non ciblés (14) ;
- commander une antenne directionnelle (32) pour transmettre un signal de brouillage vers la zone de brouillage (200) pendant une transmission des signaux de balises publicitaires (100) pour permettre la réception, par un dispositif maître (20), d'un signal de balise publicitaire (100) d'un dispositif cible (10) localisé à l'extérieur du secteur spatial spécifique ;
restreindre la transmission du signal de brouillage à au moins l'un parmi une pluralité de canaux publicitaires prédéterminés (CH37-CH39) utilisés par le réseau sans fil ; et
restreindre la transmission du signal de brouillage à la zone de brouillage à restriction directionnelle sur au moins un canal publicitaire prédéterminé des dispositifs non ciblés (14) pendant un laps de temps prédéterminé.

2. Appareil selon la revendication 1, l'appareil étant conçu pour transmettre le signal de brouillage sur l'un parmi la pluralité de canaux publicitaires prédéterminés (CH37-CH39) un seul à la fois.

3. Appareil selon la revendication 1, l'appareil étant conçu pour transmettre le signal de brouillage sur tous les canaux publicitaires prédéterminés (CH37-CH39).

4. Appareil selon la revendication 3, l'appareil étant conçu pour commander plus d'un dispositif brouilleur (30) pour transmettre le signal de brouillage sur tous les canaux publicitaires prédéterminés (CH37-CH39).

5. Appareil selon l'une quelconque des revendications précédentes, l'appareil étant conçu pour transmettre le signal de brouillage en réponse à une instruction de commande reçue du dispositif maître (20).

6. Appareil selon l'une quelconque des revendications précédentes, l'appareil étant conçu pour déterminer si le brouillage a réussi ou non.

7. Dispositif brouilleur (20) comprenant un appareil selon l'une quelconque des revendications 1 à 6 et une antenne directionnelle (32) pour transmettre le signal de brouillage vers la zone de brouillage à restriction directionnelle (200).

8. Procédé de filtrage de signaux de balises publicitaires (100) transmis par un dispositif cible (10) et des dispositifs non ciblés dans un réseau sans fil, le procédé comprenant :
la détermination (601) d'une zone de brouillage à restriction directionnelle (200) comprenant un secteur spatial spécifique de dispositifs non ciblés (14) ; et
la transmission d'un signal de brouillage vers la zone de brouillage (200) pendant la transmission des signaux de balises publicitaires (100) pour permettre la réception par un dispositif maître (20), d'un signal de balise publicitaire (100) du dispositif cible (10) localisé à l'extérieur du secteur spatial spécifique ;
la restriction de la transmission du signal de brouillage à au moins l'un parmi une pluralité de canaux publicitaires prédéterminés (CH37-CH39) utilisés par le réseau sans fil ; et
la restriction de la transmission du signal de brouillage à la zone de brouillage à restriction directionnelle sur au moins un canal publicitaire prédéterminé des dispositifs non ciblés (14) pendant un laps de temps prédéterminé.

9. Produit programme informatique comprenant un moyen de code permettant de produire les étapes de la revendication 8 lorsqu'il est exécuté sur un dispositif informatique.
